# EUROPÄISCHE PATENTSCHRIFT

(11) **EP 0 385 138 B1**
(45) Veröffentlichungstag und Bekanntmachung des Hinweises auf die Patenterteilung: **24.02.1993**
(21) Anmeldenummer: 90102303.6
(22) Anmeldetag: 06.02.1990
(51) Int. Cl.: F16J 15/34

(54) **Drehrichtungsunabhängige Gleitringdichtung**
Mechanical seal independent of the direction of rotation
Garniture mécanique d'étanchéité indépendante du sens de rotation

(30) Priorität: 01.03.1989 DE 3906412
(43) Veröffentlichungstag der Anmeldung: 05.09.1990
(73) Patentinhaber: Pacific Wietz GmbH + Co. KG, 44388 Dortmund (DE)
(72) Erfinder: Maser, Gustav, D-4600 Dortmund 50 (DE); Victor, Karl-Heinz, D-4620 Castrop-Rauxel (DE)
(74) Vertreter: Andrejewski, Walter

(56) Entgegenhaltungen:
- FR-A- 2 560 335
- GB-A- 2 007 776
- US-A- 3 953 038

## Beschreibung

Die Erfindung betrifft eine drehrichtungsunabhängige Gleitringdichtung für eine Wellendurchführung, - mit einem mit der Welle umlaufenden Gleitring, einem gehäusefesten Gegenring, einem Mitnehmerring und einer Federanordnung zwischen Mitnehmerring und Gleitring, wobei der Mitnehmerring an der Welle festsetzbar ist und die Federanordnung den Gleitring unter Zwischenschaltung eines Schmiermittelfilms wider den Gegenring drückt und wobei fernerhin die Federanordnung Formschlußelemente aufweist, die mit Formschlußgegenelementen an dem Gegenring bzw. an dem Gleitring mitnehmend wechselwirken.

Bei einer als interner Stand der Technik bekannten Gleitringdichtung, von der die Erfindung ausgeht, ist die Federanordnung eine Schraubenfeder, die die Welle mit ausreichendem Abstand umgibt. Ihre Enden sind als Formschlußelemente ausgebildet und liegen an Widerlagern an, die an dem Gleitring bzw. an dem Mitnehmerring die Formschlußgegenelemente bilden. Das ist nicht frei von Nachteilen, weil in Abhängigkeit vom zu übertragenden Drehmoment sowie in Abhängigkeit von der Drehrichtung die Windungen der Schraubenfeder ihren Durchmesser verändern und damit die in axialer Richtung auf den Gleitring wirkende Federkraft unerwünschte Veränderungen erfährt. Die Federcharakteristik ist insoweit nicht eindeutig festgelegt. - Im einzelnen ist zu Gleitringdichtungen des beschriebenen und anderen Aufbaus folgendes vorzutragen:
Bei all den vorstehend angesprochenen Gleitringdichtungen wird zwischen dem stationär in einem Gehäuse angeordneten Gegenring und dem Gleitring, der aus einem geeigneten Dichtungswerkstoff besteht, ein Dichtspalt gebildet, in dem sich ein Schmiermittelfilm befindet. Der Schmiermittelfilm in diesem Dichtspalt kann sowohl aus einem gasförmigen als auch aus einem flüssigen Schmiermittel bestehen. Entsprechend den Reibungsbedingungen entstehen unterschiedlich große Umfangskräfte, die starken zeitlichen Schwankungen unterworfen sein können. Zur Übertragung der Umfangskräfte sind Drehmomentstützen zwischen dem Gleitring und dem Gegenring angeordnet. Bei der eingangs beschriebenen Ausführungsform bilden die Formschlußelemente und die Formschlußgegenelemente an dem Gegenring und an dem Gleitring die Drehmomentstützen. Im übrigen ist es erforderlich, sowohl maschinenbedingte Auslenkungen der Welle als auch Schwingungen der Welle in radialer und in axialer Richtung auszugleichen. Auch aus diesem Grunde ist die Federanordnung zwischen dem Mitnehmerring und dem Gleitring erforderlich. Bei einer Gleitringdichtung kommt es zur ordnungsgemäßen Funktion wesentlich darauf an, daß der Gleitring in jeder Betriebssituation frei beweglich und elastisch federnd gegenüber der Welle und gegenüber dem Mitnehmerring angeordnet ist. Nur wenn diese Voraussetzungen erfüllt sind, ist ein zwangfreier elastisch federnder Kontakt mit dem Schmiermittelfilm und damit die Beherrschung der Kräfte unter Zwischenschaltung des Schmiermittelfilms sichergestellt. Die Federcharakteristik der Federanordnung darf sich dabei nicht unkontrolliert verändern. Sie tut es jedoch, wenn in der eingangs beschriebenen Weise mit einer Schraubenfeder gearbeitet wird. Im übrigen ist nachteilig, daß die Schraubenfeder verhältnismäßig lang baut.

Der Erfindung liegt die Aufgabe zugrunde, eine Gleitringdichtung des eingangs beschriebenen Aufbaus so weiter auszubilden, daß die Dichtungsanordnung unter allen Betriebsbedingungen mit definierter Federcharakteristik arbeitet, die sich auch bei unterschiedlichen Drehmomenten und unterschiedlicher Drehrichtung nicht verändert.

Zur Lösung dieser Aufgabe lehrt die Erfindung, daß die Federanordnung aus zumindest einem federnden Wellring mit Wellenbergen und Wellentälern besteht, der die Welle umgibt und aus der Ringfläche vorstehende Formschlußelemente aufweist, die über den Umfang gleichmäßig verteilt sind, und daß diese Formschlußelemente in Formschlußausnehmungen an dem Gegenring sowie an dem Gleitring einfassen. Wellringe mit Formschlußelementen sind an sich bekannt (z.B. aus der US-A-3953038), dienen jedoch anderen Federungsaufgaben und sind weder geeignet noch bestimmt, Drehmomente zu übertragen.

Im einzelnen bestehen im Rahmen der Erfindung mehrere Möglichkeiten der weiteren Ausbildung und Gestaltung. So kann die Federanordnung aus einem einzigen Wellring bestehen, der, von einer Seite aus betrachtet, aus drei gleichen Wellenbergen und drei gleichen Wellentälern aufgebaut ist, die umfangsmäßig gleich lang sind, wobei auf jeder Seite drei Formschlußelemente jeweils auf dem höchsten Punkt der Wellenberge angeordnet sind. Man kann aber die Federanordnung auch aus zwei gegenphasig zusammengesetzten Wellringen aufbauen, die auf den Wellenbergen der äußeren Ringfläche die Formschlußelemente aufweisen. Auch insoweit empfiehlt es sich, mit Wellringen zu arbeiten, die jeweils drei gleiche Wellenberge und drei gleiche Wellentäler aufweisen, wobei darüber hinaus auch die beiden Wellringe, bis auf die gegenphasige Zusammensetzung, übereinstimmen. Die Formschlußelemente können auf den Wellring bzw. auf die Wellringe aufgesetzt sein, z. B. aufgeschweißt sein. Es besteht aber auch die Möglichkeit, die Formschlußelemente an dem Wellring bzw. an den Wellringen anzuformen.

Im folgenden wird die Erfindung anhand einer lediglich ein Ausführungsbeispiel darstellenden Zeichnung ausführlicher erläutert. Es zeigen
Fig. 1 eine Ansicht einer erfindungsgemäßen Dichtungsanordnung, orthogonal zur Welle, teilweise im Schnitt,
Fig. 2 den Wellring aus dem Gegenstand der Fig. 1 in der Draufsicht,
Fig. 3 die Abwicklung des Wellringes der Fig. 2,
Fig. 4 entsprechend der Fig. 1 eine andere Ausführungsform einer erfindungsgemäßen Gleitringdichtung,
Fig. 5 die Ansicht der aus zwei gegenphasig zusammengesetzten Wellringen bestehenden Federanordnung aus dem Gegenstand der Fig. 4, und
Fig. 6 die Abwicklung der Federanordnung aus dem Gegenstand der Fig. 5.

Die in den Figuren dargestellten Gleitringdichtungen sind drehrichtungsunabhängig und für eine Wellendurchführung bestimmt. Eine Gleitringdichtung besteht jeweils aus einem mit der Welle 1 umlaufenden Gleitring 2 und einem gehäusefesten Gegenring 3. Das Gehäuse wurde nicht gezeichnet. Dem Gleitring 2 ist ein Mitnehmerring 4 zugeordnet. Eine Federanordnung 5 arbeitet zwischen dem Mitnehmerring 4 und dem Gleitring 2. Der Mitnehmerring 4 ist an der Welle 1 festgesetzt, und zwar durch eine Verschraubung 6. Die Federanordnung 5 drückt den Gleitring 2 unter Zwischenschaltung eines Schmiermittelfilms bei 7 wider den Gegenring 3. Die Federanordnung 5 weist Formschlußelemente 8 auf, die mit Formschlußgegenelementen 9 an dem Gegenring 3 und an dem Gleitring 2 mitnehmend wechselwirken. Das geschieht zum Zwecke der eingangs beschriebenen Drehmomentabstützung.

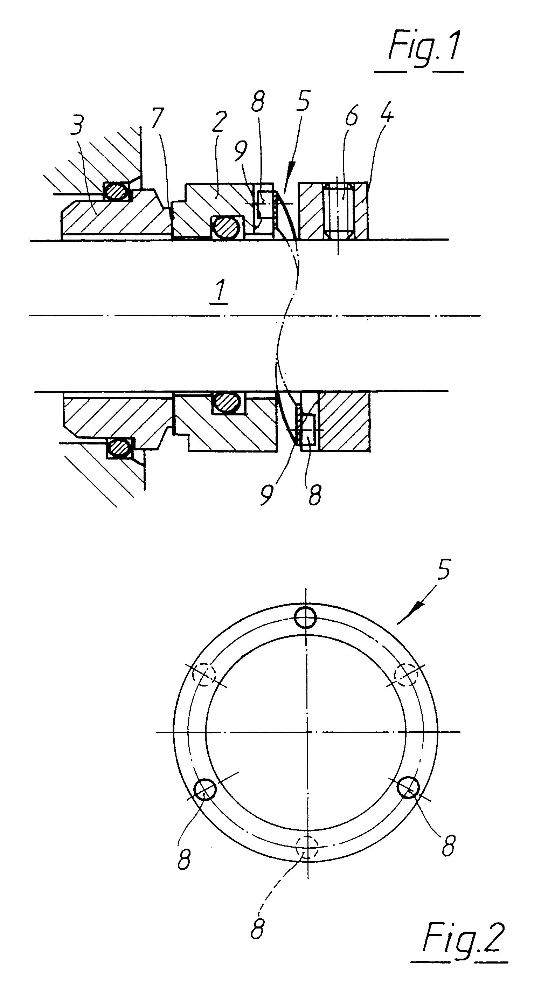

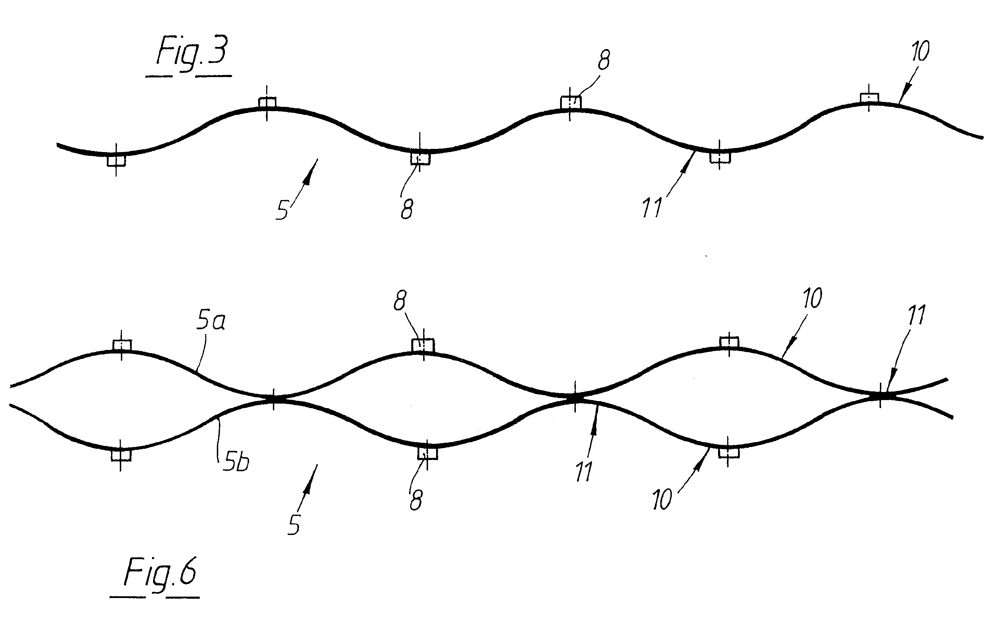

Aus einer vergleichenden Betrachtung der Fig. 1 bis 3 entnimmt man, daß die Federanordnung 5 aus einem federnden Wellring mit Wellenbergen 10 und Wellentälern 11 besteht, der die Welle 1 umgibt und aus der Ringfläche vorstehende Formschlußelemente 8 aufweist. Diese Formschlußelemente 8 fassen in Formschlußausnehmungen 9 an dem Gegenring 3 sowie an dem Gleitring 2 ein. Wie die Wellung 10, 11 verläuft und wie die Formschlußelemente 8 angeordnet sind, entnimmt man insbesondere aus der in Fig. 3 dargestellten Abwicklung, die dem Umfang des Wellringes 5 über 360° linear wiedergibt. Der Wellring 5 besteht bei der Ausführungsform nach den Fig. 1 bis 3 aus, von einer Seite aus betrachtet, drei gleichen Wellenbergen 10 und drei gleichen Wellentälern 11, die umfangsmäßig gleich lang sind. Auf jeder Seite sind drei Formschlußelemente 8 jeweils auf dem höchsten Punkt bzw. gegenüber dem tiefsten Punkt angeordnet, wie man insbesondere in der Fig. 3 erkennt. Die erfindungsgemäß bewirkte Drehmomentabstützung kann vollkommen reibungsfrei ausgeführt werden.

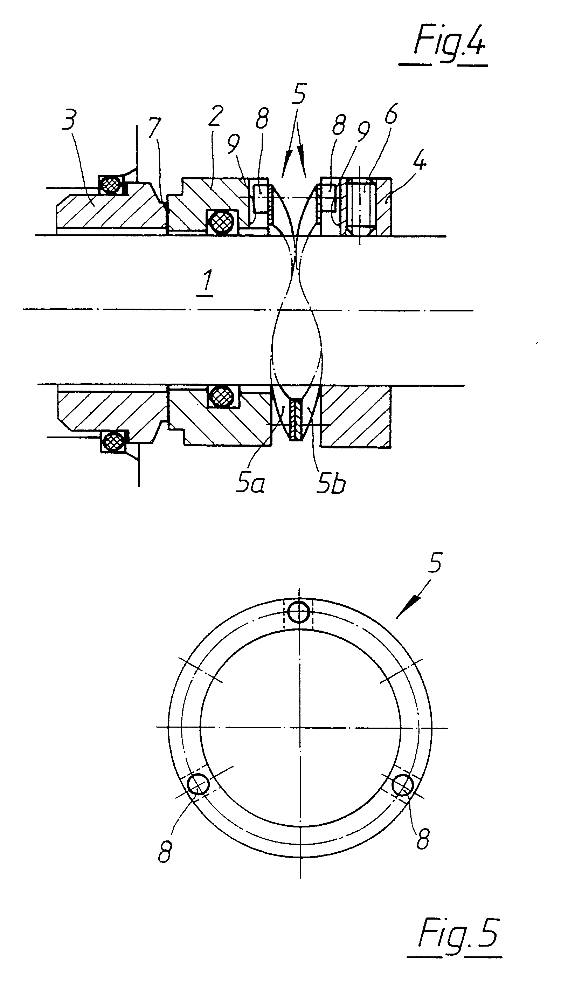

Bei der Ausführungsform nach den Fig. 4 bis 6 besteht die Federanordnung 5 aus zwei gegenphasig zusammengesetzten Wellringen 5a, 5b, die miteinander vereinigt sind, wobei auf den Wellenbergen 10 der äußeren Ringflächen die Formschlußelemente 8 angeordnet sind. Auch insoweit wird inbesondere auf die in Fig. 6 dargestellte Abwicklung verwiesen. Die beiden Wellringe 5a, 5b sind gleichsam mit den Wellentälern 11 gegeneinandergelegt und vereinigt. Auch hier sind jeweils drei Wellenberge 10 und drei Wellentäler 11 vorgesehen. Die Formschlußelemente 8 sind auf dem Wellring 5 bzw. auf die Wellringe 5a, 5b aufgesetzt, sie könnten auch geschweißt sein. Sie könnten andererseits aber auch aus dem Material der Wellringe 5 bzw. 5a, 5b ausgeformt sein.

## Patentansprüche

1. Drehrichtungsunabhängige Gleitringdichtung für eine Wellendurchführung, - mit
einem mit der Welle umlaufenden Gleitring (2),
einem gehäusefesten Gegenring (3),
einem Mitnehmerring (4), und
einer Federanordnung (5) zwischen Mitnehmerring und Gleitring,
wobei der Mitnehmerring an der Welle festsetzbar und die Federanordnung den Gleitring unter Zwischenschaltung eines Schmiermittelfilms wider den Gegenring drückt und wobei fernerhin die Federanordnung Formschlußelemente aufweist, die mit Formschlußgegenelementen an dem Mitnehmerring und an dem Gleitring mitnehmend wechselwirken, **dadurch gekennzeichnet**, daß die Federanordnung (5) aus zumindest einem federnden Wellring mit Wellenbergen (10) und Wellentälern (11) besteht, der die Welle (1) umgibt und über den Umfang gleichmässig verteilt aus der Ringfläche vorstehende Formschlußelemente (8) aufweist, und daß diese Formschlußelemente (8) in Formschlußausnehmungen (9) an dem Mitnehmerring (4) sowie an dem Gleitring (2) einfassen.

2. Drehrichtungsunabhängige Gleitringdichtung nach Anspruch 1, dadurch gekennzeichnet, daß der Wellring (5), von einer Seite aus betrachtet, aus drei gleichen Wellenbergen (10) und drei gleichen Wellentälern (11) besteht, die umfangsmäßig gleich lang sind, und daß auf jeder Seite drei Formschlußelemente (8) angeordnet sind.

3. Drehrichtungsunabhängige Gleitringdichtung nach Anspruch 1, dadurch gekennzeichnet, daß die Federanordnung (5) aus zwei gegenphasig zusammengesetzten, gleichen Wellringen (5a, 5b) besteht, die auf den Wellenbergen (10) der äußeren Ringflächen die Formschlußelemente (8) und vorzugsweise jeweils drei Wellenberge (10) und drei Wellentäler (11) aufweisen.

4. Drehrichtungsunabhängige Gleitringdichtung nach einem der Ansprüche 1 bis 3, dadurch gekennzeichnet, daß die Formschlußelemente (8) auf dem Wellring (5) bzw. auf die Wellringe (5a, 5b) aufgesetzt sind.

5. Drehrichtungsunabhängige Gleitringdichtung nach einem der Ansprüche 1 bis 3, dadurch gekennzeichnet, daß die Formschlußelemente (8) an dem Wellring (5) bzw. an den Wellringen (5a, 5b) ausgeformt sind.

## Claims

1. A rotating mechanical seal which is independent of the direction of rotation, for a shaft bushing, - with
a sliding ring (2) rotating with the shaft,
a counter-ring (3) fixed to the housing,
a carrier ring (4), and
a spring arrangement (5) between the carrier ring and the sliding ring,
wherein the carrier ring can be fixed to the shaft and the spring arrangement presses the sliding ring against the counter-ring with a film of lubricant interposed therebetween and wherein in addition the spring arrangement has positive locking elements which interact in a driving manner with positive locking counter-elements on the carrier ring and on the sliding ring, characterised in that the spring arrangement (5) comprises at least one resilient corrugated ring with wave crests (10) and wave troughs (11), which corrugated ring surrounds the shaft (1) and has positive locking elements (8) projecting from the face of the ring and uniformly distributed over its circumference, and that these positive locking elements (8) are mounted in positive locking recesses (9) on the carrier ring (4) and on the sliding ring (2).

2. A rotating mechanical seal which is independent of the direction of rotation according to Claim 1, characterised in that viewed from one face the corrugated ring (5) comprises three equal wave crests (10) and three equal wave troughs (11) which are of equal length along the circumference, and that three positive locking elements (8) are disposed on each face.

3. A rotating mechanical seal which is independent of the direction of rotation according to Claim 1, characterised in that the spring arrangement (5) comprises two like corrugated rings (5a, 5b) assembled with their phases in opposition, which corrugated rings have the positive locking elements (8) on the wave crests (10) of the outer ring faces, and each of which corrugated rings preferably has three wave crests (10) and three wave troughs (11).

4. A rotating mechanical seal which is independent of the direction of rotation according to one of Claims 1 to 3, characterised in that the positive locking elements (8) are placed upon the corrugated ring (5) or on the corrugated rings (5a, 5b).

5. A rotating mechanical seal which is independent of the direction of rotation according to one of Claims 1 to 3, characterised in that the positive locking elements (8) are formed as part of the corrugated ring (5) or of the corrugated rings (5a, 5b).

## Revendications

1. Garniture mécanique d'étanchéité indépendante du sens de rotation pour une traversée d'arbre, comprenant un anneau de glissement (2) tournant avec l'arbre, un anneau conjugué (3) solidaire du boîtier, un anneau d'entraînement (4) et un système de ressort (5) entre l'anneau d'entraînement et l'anneau de glissement, l'anneau d'entraînement pouvant être bloqué sur l'arbre et le système de ressort poussant l'anneau de glissement contre l'anneau conjugué, avec interposition d'une pellicule de lubrifiant, et le système de ressort comprenant en outre des éléments à engagement positif qui coopèrent de manière interactive dans le sens de l'entraînement avec des éléments à engagement positif conjugués sur l'anneau d'entraînement et sur l'anneau de glissement, **caractérisée par le fait** que le système de ressort (5) est constitué d'au moins un anneau ondulé élastique avec des crêtes de l'onde (10) et des creux de l'onde (11) qui enveloppe l'arbre (1) et comporte des éléments à engagement positif (8) dépassant de la surface annulaire et répartis uniformément sur la périphérie, et que ces éléments à engagement positif (8) s'engagent dans des évidements à engagement positif (9) dans l'anneau d'entraînement (4) ainsi que dans l'anneau de glissement (2).

2. Garniture mécanique d'étanchéité indépendante du sens de rotation selon la revendication 1, caractérisée par le fait que l'anneau ondulé (5) se compose, vu de l'un des côtés, de trois crêtes de l'onde (10) identiques et de trois creux de l'onde (11) identiques qui présentent la même longueur périphérique, et que sur chaque côté sont disposés trois éléments à engagement positif (8).

3. Garniture mécanique d'étanchéité indépendante du sens de rotation selon la revendication 1, caractérisée par le fait que le système de ressort (5) est constitué de deux anneaux ondulés (5a, 5b) identiques assemblés en opposition de phase dont les crêtes de l'onde (10) des surfaces annulaires extérieures présentent les éléments à engagement positif (8) et de préférence respectivement trois crêtes de l'onde (10) et trois creux de l'onde (11).

4. Garniture mécanique d'étanchéité indépendante du sens de rotation selon l'une des revendications 1 à 3, caractérisée par le fait que les éléments à engagement positif (8) sont montés sur l'anneau ondulé (5) et respectivement sur les anneaux ondulés (5a, 5b).

5. Garniture mécanique d'étanchéité selon l'une des revendications 1 à 3, caractérisée par le fait, que les éléments à engagement positif (8) sont conformés sur l'anneau ondulé (5) et respectivement sur les anneaux ondulés (5a, 5b).
